# EUROPÄISCHE PATENTSCHRIFT

(11) **EP 3 106 020 B1**
(45) Veröffentlichungstag und Bekanntmachung des Hinweises auf die Patenterteilung: **26.09.2018**
(21) Anmeldenummer: 16171872.1
(22) Anmeldetag: 30.05.2016
(51) Int. Cl.: A01F 15/08

(54) **RUNDBALLENPRESSE MIT EINEM SENSOR ZUR ERFASSUNG DER BALLENGRÖSSE**
ROUND BALER WITH A SENSOR FOR MEASURING BALE SIZE
PRESSE À BALLES RONDES AVEC UN CAPTEUR POUR LA MESURE DE LA TAILLE DE LA BALLE

(30) Priorität: 16.06.2015 DE 102015211035
(43) Veröffentlichungstag der Anmeldung: 21.12.2016
(73) Patentinhaber: Deere & Company, Moline, IL 61265 (US)
(72) Erfinder: Mercier, Jean-Alexis, 03220 Chatelperron (FR); Guerin, Sebastien, 25000 Besancon (FR); Biziorek, Stéphane, Gray La Ville (FR)
(74) Vertreter: Holst, Sönke

(56) Entgegenhaltungen:
- EP-A1- 1 969 918
- EP-A1- 2 027 764
- EP-A2- 1 396 187
- DE-A1- 19 504 685
- DE-U1- 20 005 963

## Beschreibung

Die Erfindung betrifft eine Rundballenpresse mit einem Ballenpressraum, drehbar und bei der Erstellung des Ballens ansonsten im Wesentlichen unbeweglich am Gestell der Rundballenpresse abgestützten, direkt oder indirekt mit dem Ballen zusammenwirkenden Walzen und einem Sensor zur Erfassung der Größe eines im Ballenpressraum entstehenden Ballens, wobei der Sensor konfiguriert ist, die Stützkraft zu erfassen, mit welcher sich eine der Walzen am Gestell abstützt, und wobei der Ballenpressraum durch ein endloses Pressmittel umschlossen wird, das die Walze teilweise umschließt.

### Stand der Technik

Rundballenpressen finden Verwendung, um aus halmförmigem landwirtschaftlichem Erntegut Ballen herzustellen. Derartige Rundballenpressen weisen einen Ballenpressraum und zugehörige Pressmittel auf. Nach der Fertigstellung und ggf. Umwicklung eines Ballens mit Netz, Garn oder einer Folie wird dieser nach hinten aus dem Ballenpressraum ausgeworfen.

Rundballenpressen sind üblicherweise mit Sensoren zur Erfassung der Größe des Ballens in der Ballenpresskammer ausgestattet. Diese Sensoren dienen zur Erkennung, ob der Ballen schon eine vorgegebene Größe erreicht hat und somit der Ballenbildungsvorgang zu beenden ist, und/oder zur Erkennung der seitlichen Verteilung des Ernteguts im Ballenpressraum, um angesichts der Tatsache, dass das aufgenommene Schwad in der Regel schmaler ist als der Ballenpressraum durch geeignete Lenkmaßnahmen, die durch den Bediener eines Zugfahrzeugs von Hand oder durch eine Automatik vorgenommen werden können, sicherzustellen, dass der Ballenpressraum über seine Breite hinreichend gleichmäßig gefüllt wird. Zur Erkennung der seitlichen Verteilung des Ernteguts im Ballenpressraum sind zumindest zwei nebeneinander angeordnete Sensoren bereitzustellen, um die Größe des Ballens an seitlich beabstandeten Stellen des Ballenpressraums zu erfassen.

Die Größe des Ballens wird im Stand der Technik durch direkt mit dem Ballen zusammenwirkende, ihn berührende (US 2008/00871777 A1) oder berührungslos arbeitende Sensoren (DE 10 2004 042 740 A1) erfasst, oder es wird die Spannung in Riemen erfasst, welche den Ballenpressraum umschließen, indem die Position federbelasteter, am Riemen anliegender Rollen detektiert wird (US 4 850 271), oder es wird die Position von federbelasteten Spannrollen des Riemens durch Potentiometer oder berührungslos erfasst (US 4 924 405 A, EP 2 698 055 A1).

Die EP 1 396 187 A2 zeigt eine Rundballenpresse, bei dem ein endloses Pressmittel um Walzen geführt wird, die an einem drehbaren Träger befestigt sind, der zum Auswurf des Ballens nach hinten und oben verschwenkt wird. Während der Herstellung des Ballens befinden sich die Walzen an der Unterseite der Ballenbildungskammer. Beim Schwenken des Trägers wird durch darin eingefügte Sensoren die Auflagekraft des Ballens erfasst und anhand des zeitlichen Verlaufs der erfassten Kräfte die Gesamtmasse des Ballens bestimmt.

Die als gattungsbildend angesehene DE 200 05 963 U1 beschreibt eine andere Ballenpresse mit Sensoren zur Erfassung der Größe des Ballens. Ein Sensor misst die Position eines Schwenkarms, an der eine Presswalze befestigt ist. Der Schwenkarm bewegt sich mit zunehmender Ballengröße. Ein anderer Sensor erfasst den Druck des Ballens gegen eine Presswalze im oberen Bereich der Ballenbildungskammer. Die Messwerte der Sensoren dienen zur Erkennung eines fast fertigen Ballens, der das Abwerfen eines weiteren, in einer Wickelstation umwickelten Ballens auslöst.

### Aufgabe

Die bisherigen Sensoren erfordern entweder relativ preisaufwändige, berührungslos arbeitende Sensoren oder mechanische Sensoren zur Erfassung der Position einer am Riemen anliegenden Rolle oder einer Spannrolle des Riemens, die bei der Herstellung der Ballenpresse in aufwändiger Weise zu kalibrieren sind. Zudem ist es ratsam, eine Überlastung der Rundballenpresse zu erkennen, was in den oben genannten Offenbarungen nicht berücksichtigt wird.

Das der Erfindung zu Grunde liegende Problem wird darin gesehen, eine Rundballenpresse bereitzustellen, bei der die oben erwähnten Nachteile nicht oder in einem verminderten Maß vorliegen.

### Lösung

Die vorliegende Erfindung wird durch die Patentansprüche definiert.

Eine Rundballenpresse ist mit einem Ballenpressraum, drehbar und bei der Erstellung des Ballens ansonsten im Wesentlichen unbeweglich am Gestell der Rundballenpresse abgestützten, direkt oder indirekt mit dem Ballen zusammenwirkenden Walzen und einem Sensor zur Erfassung der Größe eines im Ballenpressraum entstehenden Ballens ausgestattet. Der Sensor ist konfiguriert, die Stützkraft zu erfassen, mit welcher sich eine der Walzen Walze am Rahmen abstützt und wobei der Ballenpressraum durch ein endloses Pressmittel umschlossen wird, das eine der Walzen Walze teilweise umschließt. Es ist vorgesehen, dass einem Bediener über eine Anzeigeeinrichtung ein Warnhinweis gegeben und/oder selbsttätig die Spannung im Pressmittel heruntergesetzt wird, falls das Ausgangssignal des Sensors darauf hinweist, dass ein Schwellenwert überschritten wird, der einer maximalen Zugkraft im Pressmittel entspricht.

Mit anderen Worten wird durch den Sensor erfasst, mit welcher Kraft sich eine drehbare, ansonsten aber während der Erstellung des Ballens im Wesentlichen stationäre Walze am Gestell der Rundballenpresse abstützt. Da die Walze direkt oder indirekt mit dem im Ballenpressraum erstellten Ballen zusammenwirkt (im ersten Fall liegt der Ballen an der Walze an und im zweiten Fall liegt insbesondere ein mit dem Ballen zusammenwirkendes, endloses Pressmittel an der Walze an bzw. umschließt diese teilweise), hängt die Stützkraft der Walze von der Größe eines Ballens ab, der gerade im Ballenpressraum erstellt wird. Eine derartige Stützkraft lässt sich durch preiswerte Sensoren relativ einfach erfassen, wie Dehnungsmessstreifen, Kraftmessdosen, Piezosensoren oder dgl. Auf diese Weise erhält man eine preisgünstig aufgebaute und bei der Produktion nicht in aufwändiger Weise zu kalibrierende Sensorik zur Erfassung der Größe eines Ballens in der Ballenbildungskammer. Das Ausgangssignal des Sensors weist auf die Größe des Ballens hin, die wiederum einerseits dem Bediener eines Zugfahrzeugs der Ballenpresse angezeigt werden kann und andererseits zur Steuerung von Funktionen der Rundballenpresse verwendet werden kann, insbesondere zum Anhalten des Zugfahrzeugs, Einleiten eines Wickelvorgangs und Ausstoßen des Ballens.

Insbesondere ist beiden Enden der Walze je ein Sensor zugeordnet, zwecks Erkennung der seitlichen Verteilung des Ernteguts im Ballenpressraum. Die Signale der Sensoren können dem Bediener angezeigt werden, damit er das Zugfahrzeug und die Ballenpresse im Sinne des Erreichens eines zylindrischen Ballens über das Feld lenken kann, oder von einer Lenkautomatik im erwähnten Sinne verwendet werden.

Bei einer möglichen Ausführungsform ist die Walze an einer schwenkbaren, durch die Kraft einer Feder vorgespannten Halterung angebracht, während die Feder im Sinne einer Spannung des Pressmittels auf die Halterung und die Walze einwirkt und der Sensor konfiguriert ist, die Kraft zu erfassen, mit der sich der die Halterung an einem mit dem Gestell verbundenen Anschlag abstützt, gegen welchen die Zugkraft des Pressmittels die Halterung zieht.

Bei einer anderen Ausführungsform ist die Walze an einem Schwenkteil abgestützt, welcher zwischen einer Ballenbildungsposition und einer Ballenauswurfposition drehbeweglich ist, während das Schwenkteil in der Ballenbildungsposition durch einen Riegel mit dem Gestell koppelbar ist und der Sensor konfiguriert ist, die durch den Riegel übertragene Kraft zu erfassen.

### Ausführungsbeispiele

In den Zeichnungen sind drei nachfolgend näher beschriebene Ausführungsbeispiele der Erfindung dargestellt, wobei die Bezugszeichen nicht zu einer einschränkenden Auslegung der Ansprüche herangezogen werden sollen. Es zeigt:
- Fig. 1: eine schematische seitliche Ansicht einer ersten Ausführungsform einer Rundballenpresse,
- Fig. 2: eine schematische seitliche Ansicht einer zweiten Ausführungsform einer Rundballenpresse,
- Fig. 3: eine schematische seitliche Ansicht einer dritten Ausführungsform einer Rundballenpresse.

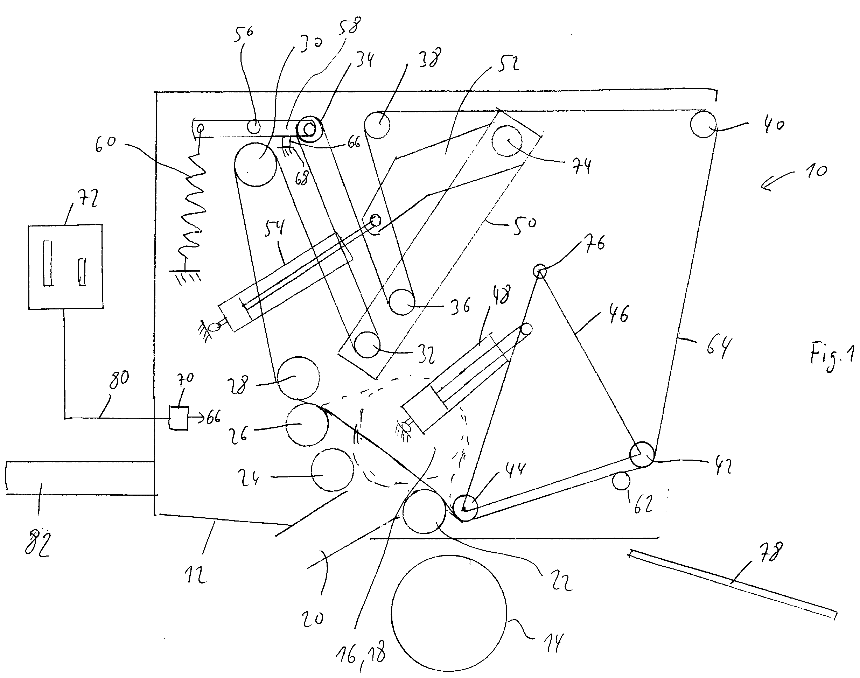

Die Figur 1 zeigt eine schematische seitliche Ansicht einer Rundballenpresse 10, die ein Gestell 12 umfasst, das sich auf Rädern 14 abstützt und mittels einer Deichsel 82 durch ein nicht gezeigtes Zugfahrzeug über ein Feld in ihrer Vorwärtsrichtung, die in der Figur 1 nach links verläuft, gezogen werden kann, um Erntegut mittels eines nicht gezeigten Aufnehmers aufzusammeln und über einen Einlasskanal 20 in einen Ballenpressraum 16 zu fördern, in dem dann sukzessive ein Ballen 18 entsteht. Der Ballenpressraum 16 wird durch im Gestell 12 drehbar gelagerte Walzen 22, 24, 26 begrenzt, die dem Einlasskanal 20 benachbart sind. Zudem wird der Ballenpressraum 16 durch ein endloses Pressmittel 64 in Form eines oder mehrerer, seitlich nebeneinander angeordneter Riemen begrenzt, der oder die weitere Walzen 28, 30, 32, 34, 36, 38, 40, 42, 62 und 44 sowie die Walze 22 teilweise umschließt, von denen eine, mehrere oder alle während der Erstellung eines Ballens 18 rotativ angetrieben werden. Die Walzen 28, 30, 38, 40 und 22 sind im Gestell 12 drehbar gelagert, d.h. abgesehen von ihrer Rotation um die Längsachse bewegen sie sich gegenüber dem Gestell 12 nicht, wenn ein Ballen 18 erstellt wird.

Die Walzen 32 und 36 sind an ihren beiden Enden jeweils an einem Träger 50 angebracht, der an dessen oberem Ende um eine Achse 74 schwenkbar am Gestell 12 angelenkt ist. Der Träger 50 ist mit einem Arm 52 starr gekoppelt, der mittels eines Hydraulikzylinders 54 vorgespannt ist. Der Träger 50 bewegt sich somit während der Erstellung eines Ballens 18 gegen einen im Kolbenstangenraum des Hydraulikzylinders 54 vorliegenden, eingestellten Druck nach oben, wenn ein Ballen 18 entsteht und dabei den Ballenpressraum 16 nach und nach größer wird, indem die den Ballenpressraum 16 nach oben und hinten hin begrenzenden Pressmittel 64 nach und nach ausweichen, wie in der Figur 1 mit gestrichelten Linien dargestellt ist.

Die Walzen 42, 62 und 42 sind an einem Schwenkteil 46 befestigt, der durch einen Aktor 48 in Form eines Hydraulikzylinders um eine obere Achse 76 nach hinten und oben verschwenkbar ist, um einen Ballen 18 aus dem Ballenpressraum 16 auszuwerfen. Der Ballen 18 rollt dann auf einer Abladerampe 78 auf den Erdboden.

Die Walze 34 ist an einer Halterung 58 befestigt, die in ihrer Mitte um eine Achse 56 schwenkbar am Gestell 12 angelenkt ist und durch eine Feder 60 vorgespannt ist. Die Feder 60 ist bestrebt, das Pressmittel 64 zu spannen, indem sie die Walze 34 im Gegenuhrzeigersinn nach oben zieht. Die Halterung 58 liegt im normalen Ballenbildungsbetrieb auf einem Anschlag 68 auf und bewegt sich nur dann aus ihrer in der Figur 1 gezeigten Position im Gegenuhrzeigersinn, wenn der Bewegungsbereich des Trägers 50 nicht hinreicht, das Pressmittel 64 straff zu halten, was nur nach dem Auswurf eines fertigen Ballens 18 und beim Beginn der Bildung eines neuen Ballens 18 möglich ist. Die Rundballenpresse 10 ist an sich im Wesentlichen aus EP 1 396 187 A1 und EP 1 364 574 A1 bekannt, deren Offenbarung durch Verweis mit in die vorliegenden Unterlagen aufgenommen wird.

Zur Erkennung der Größe eines Ballens 18 dient ein Sensor 66, der die Kraft erfasst, mit welcher die Halterung 58 auf dem Anschlag 68 aufliegt. Diese Kraft hängt von der Zugkraft im Pressmittel 64 ab, die wiederum von der Größe des Ballens 18 abhängt. Der Sensor 66 ist insbesondere als Dehnungsmessstreifen oder Kraftmessdose ausgeführt. Der Sensor 66 ist mit einer Auswertungsschaltung 70 verbunden, die vorzugsweise zusätzlich mit einem weiteren Sensor 66 auf der anderen Seite der Rundballenpresse 10 verbunden ist. Auf der anderen Seite der Rundballenpresse 10 befindet sich zudem eine weitere Halterung 58, ein weiterer Anschlag 68 und eine weitere Feder 60, die von den in der Figur 1 gezeigten Bauelementen (Halterung 58, Anschlag 68 und Feder 60) unabhängig sind und sich somit unabhängig davon bewegen können, sodass bei nicht-zylindrischen Ballen 18 durch die beiden Sensoren 66 unterschiedliche Werte erfasst werden. Die Ausgangswerte der Sensoren 66 werden durch die Auswertungsschaltung 70 an eine Anzeigeeinrichtung 72 übertragen, die sich insbesondere in der Kabine des Zugfahrzeugs befinden kann. Hierzu wird insbesondere auf eine Busleitung 80 zurückgegriffen. Der Bediener erkennt somit die Form des Ballens 72 auf der Anzeigeeinrichtung 72 anhand zweier Balkendiagramme oder einer beliebigen anderen Darstellung und kann, wenn die Balken nicht gleich groß sind, gegenlenken, um einen zylindrischen Ballen zu erzeugen. Diese Aufgabe kann auch durch eine Automatik übernommen werden. Die Auswertungsschaltung kann auch die Automatik ansteuern, um das Zugfahrzeug anzuhalten, wenn ein Ballen 18 eine vorgegebene Größe erreicht hat, ihn mit Netz, Folie oder Garn zu umwickeln, und schließlich auszuwerfen. Hierzu sei auf die EP 1 813 146 A2 verwiesen, deren Offenbarung durch Verweis mit in die vorliegenden Unterlagen aufgenommen wird.

Weiterhin dient das Signal des Sensors 66 oder der Sensoren 66 dazu eine Überlastung der Rundballenpresse 10 zu erkennen. Falls das Ausgangssignal des Sensors 66 somit darauf hinweist, dass ein Schwellenwert überschritten wird, der einer maximalen Zugkraft im Pressmittel 64 entspricht, wird dem Bediener über die Anzeigeeinrichtung 72 ein Warnhinweis gegeben und/oder es wird selbsttätig der Druck im Kolbenstangenraum des Hydraulikzylinders 54 und somit die Spannung im Pressmittel 64 heruntergesetzt. Hierzu kann ein Proportionalventil (nicht gezeigt) entsprechend angesteuert werden.

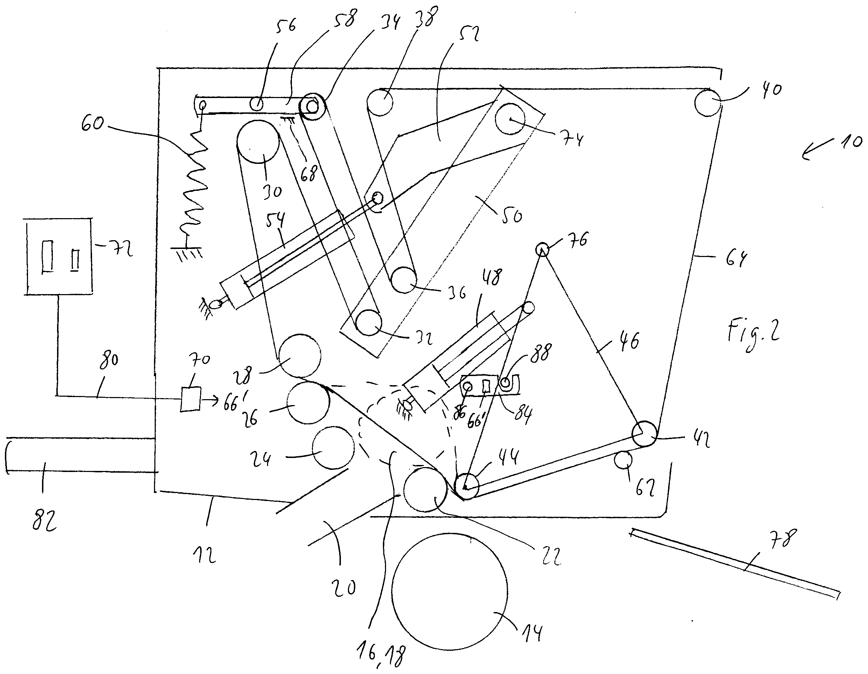

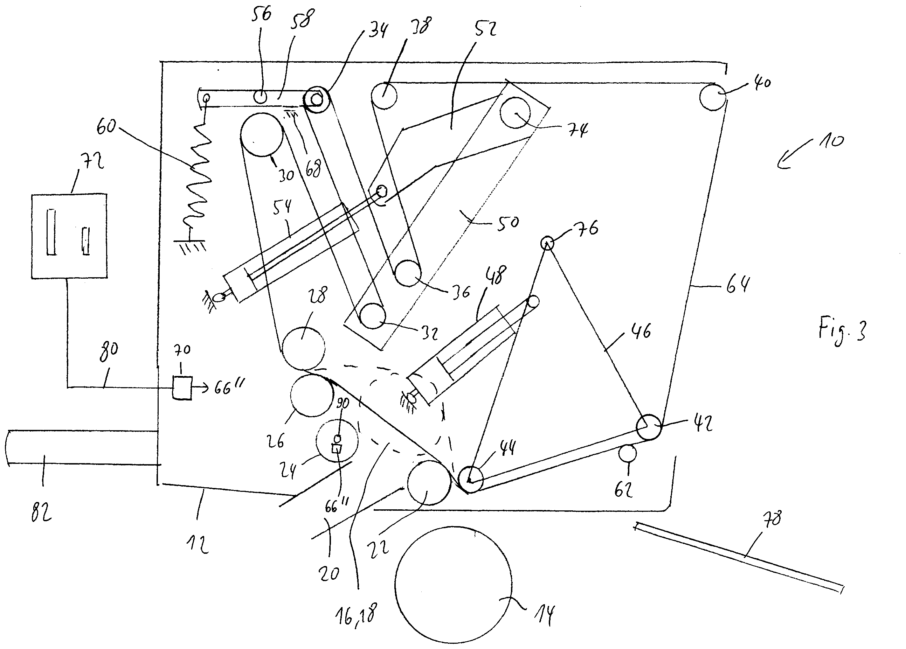

Bei der Ausführungsform nach Figur 2 ist das Schwenkteil 46 durch einen Riegel 84 am Gestell 12 arretierbar. Der Riegel 84 ist an seinem vorderen Ende um eine Achse 86 am Gestell 12 angelenkt und umschließt einen mit dem Schwenkteil 46 verbundenen Stift 88. Ein nicht gezeigter Aktor dient dazu, den Riegel 84 aus seiner in der Figur 2 gezeigten, bei der Erstellung eines Ballens 18 eingenommenen Position nach unten zu ziehen, bevor der Schwenkteil 46 durch den Aktor 48 um die Achse 76 verschwenkt wird, um einen fertigen Ballen 18 auszuwerfen. Der Riegel 84 der Ausführungsform nach Figur 2 kann auch bei den Ausführungsformen nach Figur 1 und 3 Verwendung finden. Der Riegel 84 entlastet den Aktor 48 während der Erstellung des Ballens 18. Währenddessen ist der Aktor 48 entspannt.

Bei der Ausführungsform nach Figur 2 erfasst ein Sensor 66' die vom Riegel 84 übertragene Kraft. Der Sensor 66' kann ebenfalls als Dehnungsmessstreifen oder Kraftmessdose ausgeführt werden. Vorzugsweise sind zwei Riegel 84 und zugehörige Sensoren 66' auf beiden Seiten der Rundballenpresse 10 vorgesehen, die beide mit der Auswertungsschaltung 70 verbunden sind.

Der Aufbau und die Funktionsweise der Rundballenpresse 10 nach Figur 2 sind mit der Rundballenpresse 10 nach Figur 1 identisch. Die Sensoren 66' erfassen die Kraft im Riegel 84. Diese Kraft hängt von der Zugkraft im Pressmittel 64 ab, die wiederum von der Größe des Ballens 18 abhängt. Die Zugkraft im Pressmittel 64 pflanzt sich über die Walze 44, das Schwenkteil 46 und den Riegel 84 auf das Gestell 12 fort. Die Verwendung der Signale der Sensoren 66' erfolgt in der oben bezüglich der Figur 1 beschriebenen Weise.

Bei der Ausführungsform nach Figur 3 erfasst der Sensor 66" die Kraft, mit der sich die Achse oder Welle 90 der oberhalb des Einlasskanals 20 angeordneten Walze 24 am Gestell 12 abstützt. Analog könnte der Sensor 66" auch konfiguriert sein, die Kraft zu erfassen, mit der sich die Achse oder Welle der Walze 22 oder 26 am Gestell 12 abstützt. Der Sensor 66" kann ebenfalls als Dehnungsmessstreifen oder Kraftmessdose ausgeführt werden. Vorzugsweise sind zwei Sensoren 66" auf beiden Seiten der Rundballenpresse 10 vorgesehen, die beide mit der Auswertungsschaltung 70 verbunden sind.

Der Aufbau und die Funktionsweise der Rundballenpresse 10 nach Figur 3 sind mit der Rundballenpresse 10 nach Figur 1 identisch. Die Sensoren 66" erfassen die Stützkraft der Walze 24, die wiederum von der Größe des Ballens 18 abhängt. Die Verwendung der Signale der Sensoren 66" erfolgt in der oben bezüglich der Figur 1 beschriebenen Weise.

## Patentansprüche

1. Rundballenpresse (10) mit einem Ballenpressraum (18), drehbar und bei der Erstellung des Ballens (18) ansonsten im Wesentlichen unbeweglich am Gestell (12) der Rundballenpresse (10) abgestützten, direkt oder indirekt mit dem Ballen (18) zusammenwirkenden Walzen (34, 44, 24) und einem Sensor (66, 66', 66") zur Erfassung der Größe eines im Ballenpressraum (16) entstehenden Ballens (18), wobei der Sensor (66, 66', 66") konfiguriert ist, die Stützkraft zu erfassen, mit welcher sich eine der Walzen (34, 44, 24) am Gestell (12) abstützt, und wobei der Ballenpressraum (18) durch ein endloses Pressmittel (64) umschlossen wird, das eine der Walzen die (34, 44) teilweise umschließt, **dadurch gekennzeichnet, dass** einem Bediener über eine Anzeigeeinrichtung (72) ein Warnhinweis gegeben und/oder selbsttätig die Spannung im Pressmittel (64) heruntergesetzt wird, falls das Ausgangssignal des Sensors (66, 66', 66") darauf hinweist, dass ein Schwellenwert überschritten wird, der einer maximalen Zugkraft im Pressmittel (64) entspricht.

2. Rundballenpresse (10) nach Anspruch 1, wobei beiden Enden einer der Walzen (34, 44, 24) je ein Sensor (66, 66', 66") zugeordnet ist.

3. Rundballenpresse (10) nach Anspruch 1 oder 2, wobei eine der Walzen (34) an einer schwenkbaren, durch die Kraft einer Feder (60) vorgespannten Halterung (58) angebracht ist, die Feder (60) im Sinne einer Spannung des Pressmittels (64) auf die Halterung (58) und die Walze (34) einwirkt und der Sensor (66) konfiguriert ist, die Kraft zu erfassen, mit der sich der die Halterung (58) an einem mit dem Gestell (12) verbundenen Anschlag (68) abstützt, gegen welchen die Zugkraft des Pressmittels (64) die Halterung (58) zieht.

4. Rundballenpresse (10) nach Anspruch 1 oder 2, wobei eine der Walzen (44) an einem Schwenkteil (46) abgestützt ist, welcher zwischen einer Ballenbildungsposition und einer Ballenauswurfposition drehbeweglich ist, das Schwenkteil (46) in der Ballenbildungsposition durch einen Riegel (84) mit dem Gestell (12) koppelbar ist und der Sensor (66') konfiguriert ist, die durch den Riegel (84) übertragene Kraft zu erfassen.

## Claims

1. Round baler (10) that includes a bale compression chamber (18), rollers (34, 44, 24), which are supported against the frame (12) of the round baler (10) so as to be rotatable and, during the formation of the bale (18), so as to be otherwise essentially stationary and which directly or indirectly interact with the bale (18), and a sensor (66, 66', 66") for detecting the size of a bale (18) forming in the bale compression chamber (16), wherein the sensor (66, 66', 66") is configured for detecting the supporting force with which one of the rollers (34, 44, 24) bears against the frame (12), and wherein the bale compression chamber (18) is enclosed by an endless compression means (64), which partially surrounds one of the rollers (34, 44), **characterized in that** a warning message is provided to an operator via a display device (72) and/or the tension in the compression means (64) is automatically reduced if the output signal of the sensor (66, 66', 66") indicates that a threshold value is exceeded, which threshold value corresponds to a maximum tensile force in the compression means (64).

2. Round baler (10) according to Claim 1, wherein a sensor (66, 66', 66") is assigned to each of the two ends of one of the rollers (34, 44, 24).

3. Round baler (10) according to Claim 1 or 2, wherein one of the rollers (34) is mounted on a swivellable holder (58), which is preloaded by the force of a spring (60), the spring (60) acts on the holder (58) and the roller (34) in the sense of tensioning the compression means (64), and the sensor (66) is configured for detecting the force with which the holder (58) bears against a stop (68), which is connected to the frame (12) and against which the tensile force of the compression means (64) pulls the holder (58).

4. Round baler (10) according to Claim 1 or 2, wherein one of the rollers (44) is supported against a swivelling part (46), which can be rotated between a bale formation position and a bale ejection position, the swivelling part (46), in the bale formation position, can be coupled to the frame (12) by means of a locking bar (84), and the sensor (66') is configured for detecting the force transmitted by the locking bar (84).

## Revendications

1. Presse à balles rondes (10) comprenant un espace de presse à balles (18) des rouleaux (34, 44, 24) rotatifs et, par ailleurs essentiellement immobiles lors de la confection de la balle (18), supportés sur le bâti (12) de la presse à balles rondes (10), coopérant directement ou indirectement avec la balle (18), et un capteur (66, 66', 66") pour détecter la taille d'une balle (18) en cours de formation dans l'espace de presse à balles (16), le capteur (66, 66', 66") étant configuré pour détecter la force d'appui avec laquelle l'un des rouleaux (34, 44, 24) s'appuie sur le bâti (12), et l'espace de presse à balles (18) étant entouré par un moyen de presse sans fin (64) qui entoure partiellement l'un des rouleaux (34, 44),
**caractérisée en ce qu'** un signal d'avertissement est fourni à un opérateur par le biais d'un dispositif d'affichage (72) et/ou la tension dans le moyen de presse (64) est automatiquement réduite si le signal de sortie du capteur (66, 66', 66") indique qu'une valeur seuil est dépassée, laquelle correspond à une force de traction maximale dans le moyen de presse (64).

2. Presse à balles rondes (10) selon la revendication 1, dans laquelle un capteur respectif (66, 66', 66") est associé à chaque fois aux deux extrémités de l'un des rouleaux (34, 44, 24).

3. Presse à balles rondes (10) selon la revendication 1 ou 2, dans laquelle l'un des rouleaux (34) est monté sur une fixation pivotante (58) précontrainte par la force d'un ressort (60), le ressort (60) agissant dans le sens d'un serrage du moyen de presse (64) sur la fixation (58) et le rouleau (34) et le capteur (66) étant configurés de manière à détecter la force avec laquelle la fixation (58) s'appuie contre une butée (68) connectée au bâti (12), contre laquelle la force de traction du moyen de presse (64) tire la fixation (58).

4. Presse à balles rondes (10) selon la revendication 1 ou 2, dans laquelle l'un des rouleaux (44) est supporté sur une partie pivotante (46), laquelle peut être déplacée par rotation entre une position de formation de balles et une position d'éjection de balles, la partie pivotante (46) peut être accouplée dans la position de formation de balles par un verrou (84) au bâti (12) le capteur (66') est configuré pour détecter la force transmise par le verrou (84).
